# EUROPEAN PATENT SPECIFICATION

(11) **EP 3 693 641 B1**
(45) Date of publication and mention of the grant of the patent: **02.10.2024**
(21) Application number: 18864003.1
(22) Date of filing: 03.10.2018
(51) Int. Cl.: F16K 27/00, B25B 27/14, B66F 15/00

(54) **COUPLER AND REMOVAL TOOL FOR SAME**
KOPPLER UND ENTFERNUNGSWERKZEUG DAFÜR
COUPLEUR ET OUTIL DE DÉMONTAGE POUR CELUI-CI

(30) Priority: 04.10.2017 JP 2017193990
(43) Date of publication of application: 12.08.2020
(73) Proprietor: Asahi Yukizai Corporation, Nobeoka-shi, Miyazaki 882-8688 (JP)
(72) Inventor: IGUCHI Hideaki, Nobeoka-city Miyazaki 882-8688 (JP)
(74) Representative: Lippert Stachow Patentanwälte Rechtsanwälte
(86) International application number: PCT/JP2018/036963
(87) International publication number: WO 2019/069962

(56) References cited:
- WO-A1-02/059513
- GB-A- 1 482 052
- JP-A- 2003 028 332
- JP-A- 2004 332 818
- JP-A- 2004 332 818
- JP-A- 2010 196 753
- JP-A- 2011 117 534
- JP-A- 2016 180 508
- JP-A- 2016 210 591
- US-A- 1 802 687
- US-A- 4 009 743
- US-A- 5 829 111
- US-A- 5 930 884
- US-A- 795 876
- US-A1- 2003 066 981
- US-A1- 2005 022 874
- US-A1- 2009 091 125

## Description

### Technical Field

The present invention relates to a system including an actuator, a valve and a coupler to be detachably sandwiched between the actuator and the valve, in an embodiment the system further comprises a removal tool for the same. The coupler enables an actuator to be easily attached to and detached from a valve, and a removal tool for the same.

### Background Art

Hitherto, a valve is installed in a pipe, and the flow of a fluid is controlled by opening and closing the valve. The drive unit for opening and closing the valve is called an actuator, and various types of actuation such as a pneumatic type, an electric type, a hydraulic type, and a solenoid type are used.

A valve with an actuator, in which such an actuator is connected, is configured such that the actuator and the valve are made attachable to and detachable from each other from the viewpoint of maintenance and inspection. Proposed in Patent Document 1, for example, is a valve with an actuator in which a bolt is provided in a horizontal position to enable easy tightening of the bolt. Further, proposed in Patent Document 2, for example, is a valve with an actuator configured to be attachable and detachable by using a spring clip. In addition, proposed in Patent Document 3 is a valve with an actuator configured to sandwich the valve by a bracket having a curved stirrup.

### Citation List

### Patent Documents

Patent Document 1: US Patent No. 4633897
Patent Document 2: US Patent No. 8632054
Patent Document 3: US Patent No. 6848672

JP2004332818A also discloses a prior art system.

### Summary of the Invention

### Problems to be solved by the Invention

However, the patent documents and the like presented above show room that still remains to be improved. The valve with an actuator disclosed in Patent Document 1 has been posing a problem in that the actuator and the valve are detachably fixed using a fastener such as a bolt, thus requiring a work space for unfastening when replacing the actuator. In the first place, pipes are frequently arranged to save space, and a plurality of pipes having different diameters are arranged around a single pipe. Therefore, the working space around the piping is limited, and it is extremely difficult to unfasten the actuator and the valve by using an existing fastener in such a place.

The valve with an actuator disclosed in Patent Document 2 has been posing a problem in that the use of a curved spring pin results in a complicated structure and a high manufacturing cost.

The valve with an actuator disclosed in Patent Document 3 is configured to clamp the valve with the curved stirrup, so that the stirrup has fallen off in some cases due to a vibration caused by a pressure change of a fluid in a pipe.

The present invention has been made with a view of solving the problems with the prior arts described above, and it is an object of the invention to provide a coupler which does not use a fastener, which reduces manufacturing cost, and which enables an actuator and a valve to be easily attached and detached, and a removal tool for the same. Means for solving the Problems

To this end, a system according to claim 1 has been provided. The coupler of this system is a coupler for an actuator and a valve which is detachably sandwiched between an actuator and a valve. As a first characteristic, the valve has a flange portion that projects from the outer periphery of a valve main body, and the coupler has an elastically deformable hook portion that latches onto the outer periphery of the flange portion thereby to prevent the coupler from detaching, and a fixing portion fastened to the actuator.

Further, as a second characteristic, the flange portion has at least one notched portion, and the coupler has at least one guide portion which is fitted along the notched portion.

Further, a removal tool for a coupler in accordance with the present invention is a removal tool which causes the hook portion to be elastically deformed by utilizing the principle of leverage thereby to be released from the flange portion. As a first characteristic, the removal tool includes a gripping piece and a releasing piece extended from the gripping piece, and the distal end side of the releasing piece is curved in the direction in which the hook portion is elastically deformed, and has a stepped portion formed to be in contact with only the hook portion.

Further, a second characteristic is that the removal tool further includes a finger hook piece.

### Advantageous Effect of the Invention

The present invention has the following excellent effects.
(1) The connector to which the actuator is to be fixed is engaged with the flange portion of the valve by the elastically deformable hook portion that latches onto the outer surface of the flange portion, so that the actuator can be connected to the valve with a single touch and the actuator can be easily detached from the valve simply by disengaging the hook portion. Hence, the attaching and detaching operation is easily performed in a small work space, and the attaching and detaching time can be shortened. Further, the actuator alone can be separated and replaced by releasing the engagement between the actuator and the fixing portion of the coupler.
(2) The coupler has the guide portion which is to be fitted to the notched portion provided in the flange portion of the valve, thus making it possible to prevent the coupler and the actuator from rotating with respect to the valve.
(3) By using the dedicated removal tool, the hook portion can be elastically deformed with ease to detach the coupler from the valve. Further, as compared with the case where an existing tool such as a flat-bladed screwdriver is used, damage to a plastic valve or coupler caused by scratching or the like can be prevented.

### Brief Description of the Drawings

FIG. 1 is an exploded perspective view illustrating an embodiment of a coupler for an actuator and a valve in accordance with the present invention;
FIG. 2(a) is a perspective view of the coupler in FIG. 1 observed in a plane direction, and FIG. 2(b) is a perspective view thereof observed in a bottom direction; and
FIG. 3 presents the longitudinal sectional views for explaining a removal tool in accordance with the present invention.

### Mode for carrying out the Invention

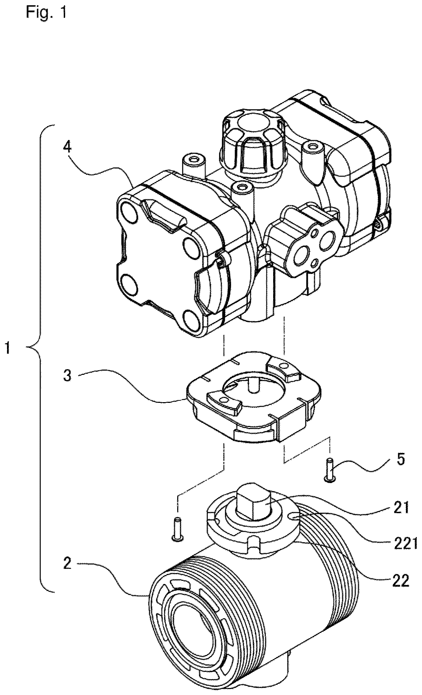

The following will describe an embodiment of the present invention with reference to the drawings that illustrate an example; however, it goes without saying that the present invention is not limited to the example. FIG. 1 is an exploded perspective view of an air ball valve 1 according to an embodiment of the present invention.

The air ball valve 1 is composed of a valve main body 2 to be connected to a pipe, and a coupler 3 to be connected, together with a fixedly provided actuator 4, to the valve main body 2 with a single touch.

The valve main body 2 is a ball valve in the present example. A valve stem 21 is protrusively provided on the top of the valve main body 2, and a disc-shaped flange portion 22 is provided on the upper end of the valve main body 2. The side circumference of the flange portion 22 is provided with a plurality of notched portions 221, and guide portions 32 are fitted into the notched portions 221.

Although the material of the valve main body 2 is not particularly limited, plastic is preferable, and examples of the plastic used include PTFE, PVDF, polyvinyl chloride (hereinafter referred to as PVC), polyethylene (hereinafter referred to as PE), and polypropylene (hereinafter referred to as PP), and any plastic having physical properties suited for the conditions or environment in which the plastic is to be used can be used.

The actuator 4 incorporates a piston and a shaft, and actuates a valve element in the valve main body 2 through the valve stem 21. In the present example, a pneumatic actuator is adopted; however, the present invention is not limited thereto, and various types of actuators such as an electric actuator can be used.

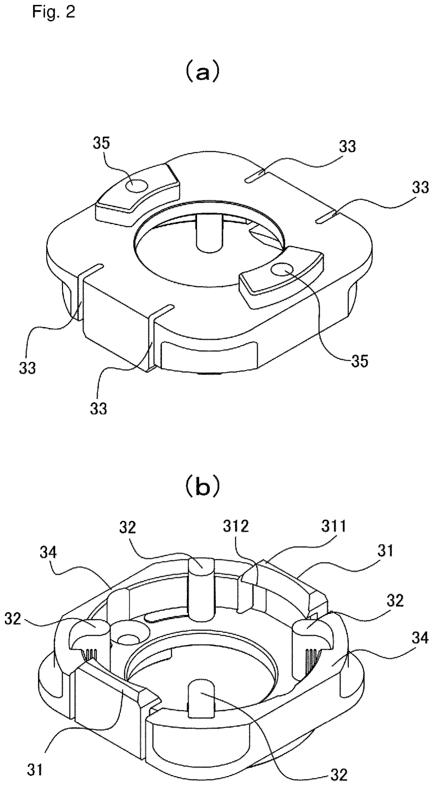

As shown in FIG. 1 and FIG. 2, the coupler 3 is provided with mounting holes 35, and fastening members 5 such as bolts are inserted into the mounting holes 35 and fixed to the actuator 4. The method of fixing the actuator 4 and the coupler 3 is not limited to this, and various fixing methods may be used insofar as a so-called fixing portion is provided. The coupler 3 has a pair of hook portions 31 formed to project downward. This arrangement enables the coupler 3 to be attached to the valve main body 2 by engaging the hook portions 31 with the outer periphery of the flange portion 22 such that the hook portions 31 latch onto the outer periphery of the flange portion 22. Slits 33 are formed on both sides of the hook portions 31, the slits 33 extending from the side surfaces to the upper surface of the coupler 3. With this arrangement, the hook portions 31 are elastically deformed with ease in a direction in which the hook portions 31 latches onto the flange portion 22 or in a direction opposite therefrom, and the hook portions 31 have a large movable range. Hence, the state in which the hook portions 31 are engaged with the flange portion 22 can be released, and the coupler 3 can be therefore detached from the valve main body 2.

As shown in FIG. 2(b), the bottom surface of the coupler 3 is provided with an annular wall 34 having a predetermined height such that the pair of hook portions 31 is a part of the outer periphery, thus providing a predetermined clearance between the actuator 4 and the valve main body 2. The annular wall 34 is provided with a plurality of guide portions 32 projecting inward from the annular wall 34 at positions corresponding to the notched portions 221 described above. This arrangement makes it possible to prevent the coupler 3 and the actuator 4 from rotating with respect to the valve main body 2. Further, toes 312 of the hook portions 31 are formed in an arc shape to match the inner periphery of the annular wall 34, and are configured such that the toes 312 are easily detached from the outer periphery of the flange portion 22.

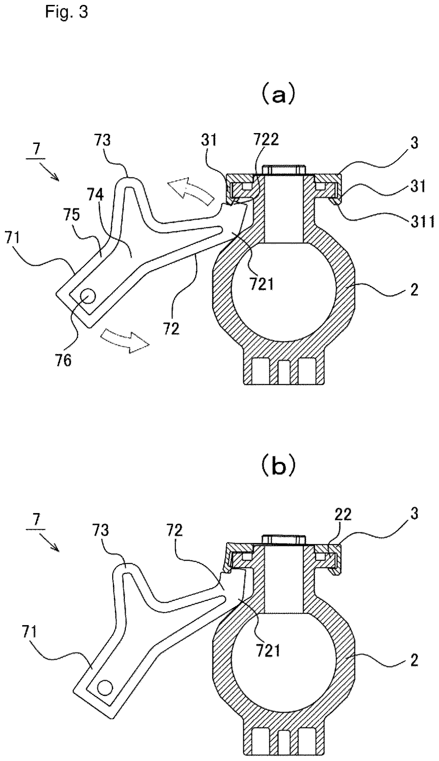

A description will now be given of the removal tool in accordance with the present invention. As illustrated in FIG. 3, a removal tool 7 in accordance with the present invention elastically deforms the hook portions 31 by utilizing the principle of leverage to disengage the hook portions 31 from the flange portion 22. FIG. 3(a) illustrates a state in which the removal tool 7 has been placed on the hook portion 31, and FIG. 3(b) illustrates a state in which the hook portion 31 has been elastically deformed.

The removal tool 7 is a substantially Y-shaped plate provided with a gripping piece 71 that is gripped by an operator, a release piece 72 integrally extended from the gripping piece 71, and a finger hook piece 73 integrally extended from the gripping piece 71. A recessed surface 74 is provided on each of the front surface and the rear surface of the removal tool 7, and a step is provided between a peripheral surface 75 and the recessed surface 74 to enable the operator to set his or her fingertip at the step during an operation. In addition, a through hole 76 is provided so that the operator can move, carrying the removal tool 7 by a string, a chain, or the like attached thereto.

As illustrated in FIG. 3(a), a curved portion 721 is formed at the distal end (the end to be in contact with the valve main body 2) of the release piece 72. The curved portion 721 is curved in a direction that is advantageous for the principle of leverage to work, i.e. a direction for elastically deforming the hook portions 31, so that the curved portion 721 is brought into contact with the valve main body 2 to function as a fulcrum of the principle of leverage, and the distal end of the release piece 72 functions as the operating point of the principle of leverage.

A stepped portion 722 is formed at the distal end of the release piece 72. Hence, the distal end of the release piece 72 securely comes in contact with a top surface 311 of the hook portion 31, thus making it possible to press the hook portion 31 in the direction in which the hook portion 31 is elastically deformed.

With the removal tool 7 configured as described above, the operator can easily detach the toe 312 from the outer periphery of the flange portion 22 by deforming the toe 312, as illustrated in FIG. 3(b), by gripping the gripping piece 71 with one hand, inserting the distal end of the release piece 72 to the bottom of the flange portion 22, bringing the curved portion 721 into contact with the outer surface of the valve main body 2 and also bringing the stepped portion 722 into contact with the top surface 311, which is the distal end of the hook portion 31, and then simply by applying a force in the direction in which the principle of leverage works, with the curved portion 721 being the fulcrum.

The removal tool 7 in accordance with the present invention only needs to include the gripping piece 71 and the release piece 72 as described above, and the key point is to deform the hook portions 31 by utilizing the principle of leverage. It is self-evident that even if the removal tool 7 does not have the finger hook piece 73 and the recessed surface 74, the removal tool 7 functions as a removal tool. However, in terms of workability such as ease of gripping, the provision of the finger hook piece 73 and the recessed surface 74 can impart a variety of gripping methods.

Further, the gist of the coupler in accordance with the present invention is that each of the hook portions 31 provided on the coupler 3 and the flange portion 22 provided on the valve main body 2 can be easily attached and detached with a single touch. Hence, for example, the coupler 3 and the valve main body 2 may be configured to be rotatable with each other without providing the guide portions 32 and the notched portions 221, and the present invention is not limited to the illustrated example. Further, the valve main body 2 is not limited to the illustrated ball valve, and various valves such as a diaphragm valve and a stop valve may be used.

### Description of Reference Numerals

- 1: air ball valve
- 2: valve main body
- 21: valve stem
- 22: flange portion
- 221: notched portion
- 3: coupler
- 31: hook portion
- 311: top surface
- 312: toe
- 32: guide portion
- 33: slit
- 34: annular wall
- 35: mounting hole (fixing portion)
- 4: actuator
- 5: fastening member
- 7: removal tool
- 71: gripping piece
- 72: release piece
- 721: curved portion
- 722: stepped portion
- 73: finger hook piece
- 74: recessed surface
- 75: peripheral surface

## Claims

1. A system (1) including an upper actuator (4), a lower valve (2) and
a coupler (3) to be detachably sandwiched between the actuator (4) and the valve (2) for coupling the actuator (4) to the valve (2),
wherein the valve (2) includes a flange portion (22) that projects from an outer periphery of a valve main body, and the coupler (3) includes a pair of elastically deformable hook portions (31) that are latchable onto an outer periphery of the flange portion (22) thereby to prevent the coupler (3) from detaching, and a fixing portion (35) to be fastened to the actuator (4), wherein the elastically deformable hook portions (31) formed to project downward are releasably engageable with the flange portion (22), wherein the bottom surface of the coupler (3) includes an annular wall (34) having a predetermined height for providing a predetermined clearance between the actuator (4) and the valve main body, wherein the pair of hook portions (31) is a part of the outer periphery of the annular wall (34), wherein the hook portions (31) include toes (312) which are formed in an arc shape to match an inner periphery of the annular wall (34) and are configured to be easily detachable from the outer periphery of the flange portion (22);
wherein the coupler (3) includes slits (33) extending from a side surface to an upper surface of the coupler (3), wherein the slits (33) are formed on both sides of each of the hook portions (31).

2. The system according to claim 1, wherein the flange portion (22) includes at least one notched portion (221), and the coupler (3) includes at least one guide portion (32) which is fittable along the notched portion (221).

3. The system according to claim 1 or 2, wherein the hook portions (31) of the pair of elastically deformable hook portions (31) are facing each other.

4. The system according to any one of preceding claims, further including a removal tool (7) which is usable to remove the coupler (3)from the valve (2), wherein the removal tool (7) is configured to cause a hook portion (31) of the coupler (3) to be elastically deformed by utilizing the principle of leverage, thereby to release the hook portion (31) of the coupler (3) from the flange portion (22) of the valve (2), the removal tool (7) comprising a gripping piece (71) and a releasing piece (72) extended from the gripping piece (71), wherein a curved portion (721) is formed at a distal end side of the releasing piece (72), wherein the curved portion (721) is curved in a direction that is advantageous for the principle of leverage to work for elastically deforming the hook portion (31), wherein the curved portion (721) is configured to be brought into contact with the top surface which is a distal end of the main body of the valve (2) to function as a fulcrum of the leverage principle, wherein the distal end side of the releasing piece (72) has a stepped portion (722) formed to come in contact with the hook portion (31) for pressing the hook portion (31) in the direction in which the hook portion (31) is elastically deformable, and wherein an end of the distal end side of the releasing piece (72) is configured to fit a bottom surface of the flange portion (22) when the curved portion (721) is brought is contact with the main body of the valve (2) and the stepped portion (722) is brought is contact with the hook portion (31) of the coupler (3).

5. The system according to claim 4, wherein the removal tool (7) further includes a finger hook piece (73) integrally extended from the gripping piece (71).

6. The system according to claim 4 or 5, wherein the removal tool (7) is an Y-shaped plate with a front surface and a rear surface, wherein a peripheral surface (75) and a recessed surface (74) are provided on each of the front surface and the rear surface, wherein a step is provided between the peripheral surface (75) and the recessed surface (74) for enabling an operator to set a finger at the step.

## Patentansprüche

1. System (1), umfassend
einen oberen Aktuator (4), ein unteres Ventil (2) und
eine Kopplungseinrichtung (3), die abnehmbar zwischen dem Aktuator (4) und dem Ventil (2) anzuordnen ist, um den Aktuator (4) mit dem Ventil (2) zu koppeln;
wobei das Ventil (2) einen Flanschabschnitt (22) umfasst, der sich von einem äußeren Umfang eines Ventilhauptkörpers erstreckt, und die Kopplungseinrichtung (3) ein Paar elastisch verformbarer Hakenabschnitte (31) umfasst, die an einem äußeren Umfang des Flanschabschnitts (22) derart einrastbar sind, dass verhindert wird, dass sich die Kopplungseinrichtung (3) löst, und einen Fixierabschnitt (35), der am Aktuator (4) zu befestigen ist, wobei die elastisch verformbaren Hakenabschnitte (31), welche so ausgebildet sind, dass sie nach unten vorstehen, lösbar mit dem Flanschabschnitt (22) in Eingriff bringbar sind, wobei die Unterseite der Kopplungseinrichtung (3) eine ringförmige Wand (34) mit einer vorbestimmten Höhe umfasst, die einen vorbestimmten Abstand zwischen dem Aktuator (4) und dem Ventilhauptkörper bereitstellt, wobei das Paar von Hakenabschnitten (31) ein Teil des äußeren Umfangs der ringförmigen Wand (34) ist, wobei die Hakenabschnitte (31) Vorsprünge (312) umfassen, die derart in einer Bogenform ausgebildet sind, dass sie zu einem inneren Umfang der ringförmigen Wand (34) passen, und derart ausgeführt sind, dass sie leicht vom äußeren Umfang des Flanschabschnitts (22) abnehmbar sind;
wobei die Kopplungseinrichtung (3) Schlitze (33) umfasst, die von einer Seitenfläche zu einer Oberseite der Kopplungseinrichtung (3) verlaufen, wobei die Schlitze (33) auf beiden Seiten jedes der Hakenabschnitte (31) ausgebildet sind.

2. System nach Anspruch 1, wobei der Flanschabschnitt (22) mindestens einen gekerbten Abschnitt (221) umfasst und die Kopplungseinrichtung (3) mindestens einen Führungsabschnitt (32) aufweist, der an dem gekerbten Abschnitt (221) entlang einpassbar ist.

3. System nach Anspruch 1 oder 2, wobei die Hakenabschnitte (31) des Paares von elastisch verformbaren Hakenabschnitten (31) einander zugewandt sind.

4. System nach einem der vorstehenden Ansprüche, ferner umfassend ein Entfernungswerkzeug (7), das verwendbar ist, um die Kopplungseinrichtung (3) von dem Ventil (2) zu entfernen, wobei das Entfernungswerkzeug (7) dazu eingerichtet ist, durch Nutzung des Hebelprinzips eine elastische Verformung des Hakenabschnitts (31) der Kopplungseinrichtung (3) zu bewirken, um dadurch den Hakenabschnitt (31) der Kopplungseinrichtung (3) von dem Flanschabschnitt (22) des Ventils (2) zu lösen, das Entfernungswerkzeug (7) umfassend ein Greifstück (71) und ein aus dem Greifstück (71) herausragendes Freigabestück (72), wobei ein gekrümmter Abschnitt (721) an einer distalen Endseite des Freigabestücks (72) ausgebildet ist, wobei der gekrümmte Abschnitt (721) in eine Richtung gekrümmt ist, die für das Funktionieren des Hebelprinzips für die elastische Verformung des Hakenabschnitts (31) vorteilhaft ist, wobei der gekrümmte Abschnitt (721) dazu eingerichtet ist, in Kontakt mit der Oberseite, die ein distales Ende des Hauptkörpers des Ventils (2) ist, gebracht zu werden, um als Drehpunkt des Hebelprinzips zu dienen, wobei die distale Endseite des Freigabestücks (72) einen abgestuften Abschnitt (722) aufweist, der ausgebildet ist, um mit dem Hakenabschnitt (31) in Kontakt zu kommen, um den Hakenabschnitt (31) in die Richtung zu drücken, in der der Hakenabschnitt (31) elastisch verformbar ist, und wobei ein Ende der distalen Endseite des Freigabestücks (72) dazu eingerichtet ist, auf eine Unterseite des Flanschabschnitts (22) zu passen, wenn der gekrümmte Abschnitt (721) in Kontakt mit dem Hauptkörper des Ventils (2) gebracht wird und der abgestufte Abschnitt (722) in Kontakt mit dem Hakenabschnitt (31) der Kopplungseinrichtung (3) gebracht wird.

5. System nach Anspruch 4, wobei das Entfernungswerkzeug (7) ferner ein von dem Greifstück (71) als einstückige Verlängerung vorstehendes Fingerhakenstück (73) umfasst.

6. System nach Anspruch 4 oder 5, wobei das Entfernungswerkzeug (7) eine Y-förmige Platte mit einer Vorderseite und einer Rückseite ist, wobei eine Umfangsfläche (75) und eine vertiefte Fläche (74) jeweils an der Vorderseite und der Rückseite bereitgestellt sind, wobei ein Absatz zwischen der Umfangsfläche (75) und der vertieften Fläche (74) bereitgestellt ist, um einem Bediener zu ermöglichen, einen Finger an dem Absatz anzusetzen.

## Revendications

1. Système (1) incluant un actionneur supérieur (4), une vanne inférieure (2) et un coupleur (3) destiné à être placé de manière détachable entre l'actionneur (4) et la vanne (2) afin de coupler l'actionneur (4) à la vanne (2),
dans lequel la vanne (2) inclut une partie de bride (22) qui fait saillie depuis une périphérie externe d'un corps principal de vanne, et le coupleur (3) inclut une paire de parties de crochet déformables élastiquement (31) qui peuvent s'accrocher à une périphérie externe de la partie de bride (22) empêchant ainsi le coupleur (3) de se détacher, et une partie de fixation (35) destinée à être attachée à l'actionneur (4), dans lequel les parties de crochet déformables élastiquement (31) façonnées pour faire saillie vers le bas peuvent venir en prise de manière libérable avec la partie de bride (22), dans lequel la surface inférieure du coupleur (3) inclut une paroi annulaire (34) ayant une hauteur prédéterminée pour fournir un espace prédéterminé entre l'actionneur (4) et le corps principal de la vanne, dans lequel la paire de parties de crochet (31) fait partie de la périphérie externe de la paroi annulaire (34), dans lequel les parties de crochet (31) incluent des bouts (312) qui sont façonnés en forme d'arc pour correspondre à une périphérie interne de la paroi annulaire (34) et sont conçus pour être facilement détachables de la périphérie externe de la partie de bride (22) ;
dans lequel le coupleur (3) inclut des fentes (33) s'étendant depuis une surface latérale jusqu'à une surface supérieure du coupleur (3), dans lequel les fentes (33) sont formées sur les deux côtés de chacune des parties de crochet (31).

2. Système selon la revendication 1, dans lequel la partie de bride (22) inclut au moins une partie crantée (221), et le coupleur (3) inclut au moins une partie de guide (32) qui est ajustable le long de la partie crantée (221).

3. Système selon la revendication 1 ou 2, dans lequel les parties de crochet (31) de la paire de parties de crochet déformables élastiquement (31) font face l'une à l'autre.

4. Système selon l'une quelconque des revendications précédentes, incluant en outre un outil de démontage (7) qui peut être utilisé pour démonter le coupleur (3) de la vanne (2), dans lequel l'outil de démontage (7) est conçu pour amener une partie de crochet (31) du coupleur (3) à se déformer élastiquement en utilisant un effet de levier, libérant ainsi la partie de crochet (31) du coupleur (3) de la partie de bride (22) de la vanne (2), l'outil de démontage (7) comprenant un élément de préhension (71) et un élément de libération (72) étendu depuis l'élément de préhension (71), dans lequel une partie incurvée (721) est formée au niveau d'un côté d'extrémité distale de l'élément de libération (72), dans lequel la partie incurvée (721) est incurvée dans une direction qui est avantageuse pour que l'effet de levier fonctionne afin de déformer élastiquement la partie de crochet (31), dans lequel la partie incurvée (721) est conçue pour être amenée en contact avec la surface supérieure qui est une extrémité distale du corps principal de la vanne (2) afin de fonctionner comme point d'appui de l'effet de levier, dans lequel le côté d'extrémité distale de l'élément de libération (72) a une partie étagée (722) façonnée pour venir en contact avec la partie de crochet (31) afin d'appuyer sur la partie de crochet (31) dans la direction dans laquelle la partie de crochet (31) est déformable élastiquement, et dans lequel une extrémité du côté d'extrémité distale de l'élément de libération (72) est conçue pour s'ajuster à une surface inférieure de la partie de bride (22) lorsque la partie incurvée (721) est mise en contact avec le corps principal de la vanne (2) et la partie étagée (722) est mise en contact avec la partie de crochet (31) du coupleur (3).

5. Système selon la revendication 4, dans lequel l'outil de démontage (7) inclut en outre un élément de repose-doigt (73) s'étendant d'une seule pièce depuis l'élément de préhension (71).

6. Système selon la revendication 4 ou 5, dans lequel l'outil de démontage (7) est une plaque en Y avec une surface avant et une surface arrière, dans lequel une surface périphérique (75) et une surface évidée (74) sont fournies sur chacune parmi la surface avant et la surface arrière, dans lequel un cran est fourni entre la surface périphérique (75) et la surface évidée (74) pour permettre à un utilisateur de poser un doigt au niveau du cran.
